# EUROPÄISCHE PATENTSCHRIFT

(11) **EP 0 448 831 B1**
(45) Veröffentlichungstag und Bekanntmachung des Hinweises auf die Patenterteilung: **20.10.1993**
(21) Anmeldenummer: 90125170.2
(22) Anmeldetag: 21.12.1990
(51) Int. Cl.: B01J 41/04

(54) **Verfahren zur Reinigung von Abwasser**
Process for purifying waste water
Procédé pour purifier de l'eau usée

(30) Priorität: 30.03.1990 DE 4010265
(43) Veröffentlichungstag der Anmeldung: 02.10.1991
(73) Patentinhaber: KERNFORSCHUNGSZENTRUM KARLSRUHE GMBH, D-76050 Karlsruhe (DE)
(72) Erfinder: Höll, Wolfgang, Dr., W-7505 Ettlingen (DE); Eberle, Siegfried, Prof. Dr., W-7514 Egg.-Leopoldshafen (DE); Mäurer, Martin, W-7500 Karlsruhe (DE)

(56) Entgegenhaltungen:
- DE-A- 3 340 305
- GB-A- 2 020 257
- US-A- 4 303 704
- US-A- 4 732 609

## Beschreibung

Die Erfindung betrifft ein verfahren zur Reinigung von Abwasser entsprechend dem Oberbegriff des ersten Patentanspruchs.

Ein solches verfahren ist aus der DE-PS 36 14 061 bekannt.

Dort wird zum Entfernen von komplexierten Metallionen und des anionischen Komplexbildners für die Metallionen das Abwasser mit einem stark basischen anionischen Austauscherharz in Kontakt gebracht, da das mit einem Anion beladen ist, das mit den Metallionen keinen oder einen schwächeren Komplex bildet als die Metallionen mit dem Komplexbildner.

In dieser Druckschrift wird angegeben, daß sich dabei im Harz zwei Zonen ausbilden: eine führende Zone, die organometallische koordinierte Verbindungen enthält, sowie eine nachfolgende Zone, in der der Organometallkomplex durch die freien Komplexbildnermoleküle ersetzt ist.

Das Verfahren wird abgebrochen, sobald die führende Zone durch die Ionenaustauscherschicht hindurchgewandert ist.

Danach wird der Ionenaustauscher regeneriert.

Die Regenerierung kann mit einer einfachen Salzlösung erfolgen. In diesem Fall werden Komplexbildner (nachfolgende Zone) und komplexierte Metallionen (führende Zone) nicht voneinander getrennt.

Eine Trennung von Komplexbildnern und komplexierten Metallionen erhält man, wenn der Anionenaustauscher zuerst mit einer Lösung des Komplexbildners eluiert und anschließend mit einer Salzlösung regeneriert wird.

Der Nachteil dieses Verfahrens besteht darin, daß im wesentlichen nur aufkonzentriert wird und keine unkomplexierten Metallionen abgetrennt werden.

Der Komplexbildner kann nur durch Zugabe von weiterem Komplexbildner isoliert werden.

Aufgabe der Erfindung ist, diese Nachteile bei den Verfahren der eingangs genannten Art zu vermeiden.

Insbesondere sollen die Organometallkomplexverbindungen aufgespalten werden, so daß direkt und ohne weitere Behandlungsschritte der Komplexbildner und eine Lösung des unkomplexierten Metalls getrennt oder zumindest in stark angereicherter Form erhalten werden. Das Verfahren soll weiterhin eine Wiederverwendung von Komplexbildner und Metallionen ermöglichen.

Die Aufgabe wird erfindungsgemäß durch die im ersten Patentanspruch gekennzeichneten Merkmale gelöst.

Überraschenderweise hat sich gezeigt, daß, wenn Abwasser, in dem Metallionen durch organische Komplexbildner mittlerer Komplexierungsstärke komplexiert sind, mit einem beladenen Anionenaustauscher der eingangs genannten Art in Kontakt gebracht wird, die Komplexbildner nicht die nachfolgende, sondern die führende Beladungszone darstellen. Die nachfolgende Beladungszone wird in diesem Fall durch die Organometallkomplexverbindungen mit einem zumindest stark verminderten Komplexbildneranteil gebildet.

Metallionen können mehrwertige, insbesondere die in der genannten DE-PS angegebenen Ionen sein. Unter Komplexbildnern mittlerer Komplexierungsstärke werden insbesondere die Salze der Weinsäure, der Citronensäure und der Gluconsäure verstanden, nicht dagegen starke Komplexbildner wie EDTA und NTA.

Aus den Ausführungsbeispielen 6, 7 und 12 der eingangs genannten Patentschrift geht hervor, daß der Durchbruch der nunmehr führenden Zone, nämlich der Komplexbildner, entweder nicht abgewartet oder nicht erkannt wurde.

Diese Beobachtung eröffnet ein vereinfachtes Verfahren zur Reinigung von Organometallkomplexverbindungen enthaltendem Abwasser.

Das Ionenaustauschverfahren wird erst abgebrochen, wenn die nachfolgende Zone durchzubrechen droht und nicht bereits dann, wenn der Durchbruch der führenden Zone bevorsteht.

Dadurch wird im Ablauf des Ionenaustauschers der reine Komplexbildner frei und kann in einer getrennten Fraktion isoliert und ggf. wiederverwendet werden.

Der Abbruch des Verfahrens erfolgt spätestens dann, wenn der Organometallkomplex, also die nachfolgende Zone, vor dem Durchbruch steht.

Zu diesem Zeitpunkt ist der Ionenaustauscher bereits weitgehend oder sogar vollständig von Komplexbildnern befreit.

Vorteilhafte Ausführungsarten des erfindungsgemäßen Verfahrens sind in den Unteransprüchen angegeben.
Vorzugsweise werden schwach basische Anionenaustauscher mit tertiären, sekundären oder primären funktionellen Gruppen eingesetzt.

Weiterhin werden stark und schwach basische Anionenaustauscher mit einem Polyacrylsäureamid als funktionelle Gruppe bevorzugt.

Beispielsweise kann der Anionenaustauscher die folgenden funktionellen Gruppen aufweisen: 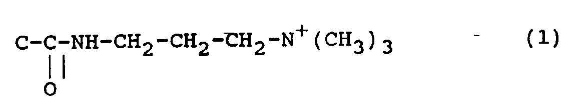 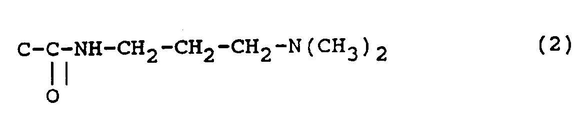
Die funktionelle Gruppe (1) charakterisiert einen stark basischen, die funktionelle Gruppe (2) einen schwach basischen Anionenaustauscher.

Weiterhin werden Anionenaustauscher mit Pyridinium als funktioneller Gruppe, beispielsweise 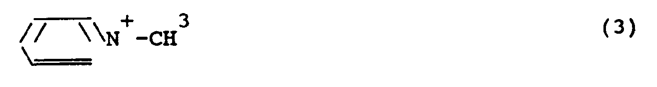
bevorzugt.

Das erfindungsgemäße Verfahren kann jedoch auch mit Anionenaustauschern des Typs I oder II durchgeführt werden.

Diese Anionenaustauscher weisen die funktionellen Gruppen

-N⁺(CH₃)₃ (Typ I)

oder

-N⁺(CH₃)₂(C₂H₄OH) (Typ II)

auf.

Wie oben ausgeführt, wird die Einleitung des Abwassers in den Anionenaustauscher beendet, sobald die führende Zone aus dem Austauscherharz abgelaufen ist.

Danach wird der Anionenaustauscher regeneriert, wobei die Metallionen und ggf. noch Reste des Komplexbildners freigesetzt werden.

Die Regenerierung bewirkt jedoch nicht nur die Freisetzung der zweiten Fraktion, die die Metallionen enthält, sondern auch die Beladung des Anionenaustauschers mit dem Salzanion.

Somit können zur Regenerierung im Prinzip alle Salze verwendet werden, deren Anion mit den im Abwasser vorliegenden Metallionen keinen oder einen schwächeren Komplex bildet als der enthaltene organische Komplexbildner.

Gleichzeitig wird bei der Regenierung der Anionenaustauscher für einen neuen Arbeitsgang vorbereitet.

Als Regeneriersalz kann z. B. NaCl in wäßriger Lösung eingesetzt werden.

Idealerweise wird der Komplexbildner vollständig mit der führenden Zone aus dem Austauscherharz entfernt, so daß der Anionenaustauscher nach Beendigung der Abwasserzugabe bei der Regenerierung nur noch eine Lösung der unkomplexierten Metallionen freisetzt. Für manche Zwecke mag jedoch eine nicht vollständige Abtrennung der Komplexbildner ausreichen, so daß sich eine zweite Fraktion ergibt, in der neben unkomplexierten Metallionen zu einem geringeren Teil auch noch komplexierte Metallionen vorliegen.

In diesem Fall kann der größere, nicht komplexierte Metallanteil durch Zugabe von Fällungschemikalien (z. B. Ca(OH)₂ oder Na₂S) weitgehend ausgefällt werden, ohne daß weitere Behandlungsschritte erforderlich sind.

Besonders vorteilhaft kann das erfindungsgemäße Verfahren mit einem Anionenaustauscher durchgeführt werden, der mit dem Anion Hydrogencarbonat beladen ist. In diesem Fall ist der Anionenaustauscher bei der Regenerierung mit einer Hydrogencarbonat-Lösung, etwa von NaHCO₃ oder Mg(HCO₃)₂, zu behandeln.

Aus der dabei abgetrennten zweiten Fraktion, die die Metallionen, Hydrogencarbonat und ggf. noch Reste von Komplexbildner enthält, können die Metallionen in besonders einfacher Weise als Carbonate abgetrennt werden.

Die Regenerierung erfolgt vorzugsweise nach dem in der EP-A-0286699 beschriebenen Verfahren, bei dem das Hydrogencarbonat z. B. aus MgO, CO₂ und Wasser unter Druck erzeugt wird. Dieses Verfahren hat insbesondere den Vorzug, daß Überschüsse des Regenerierungsmittels nicht zu einer Aufsalzung des Abwassers führen.

Die Erfindung wird im folgenden anhand von Beispielen näher erläutert.

Die Figuren zeigen den Konzentrationsverlauf von Metallionen und Komplexbildnern bei der Durchführung der in den Beispielen beschriebenen Versuche.

In allen Fällen wurde der Anionenaustauscher in üblicher Weise in eine Austauschersäule eingefüllt und mit von oben nach unten durchlaufendem Wasser in Kontakt gebracht.

### Beispiel 1

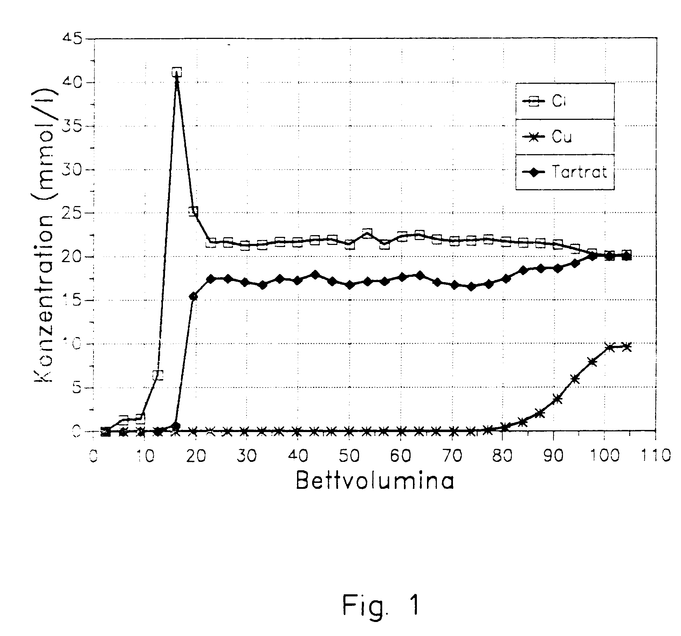

47 ml eines stark basischen Austauschers auf Acrylamidbasis (Handelsname AMBERLITE IRA 958) wird beaufschlagt mit einer Lösung, die 10 mmol/l CuCl₂ und 20 mmol/l NaK-Tartrat enthielt. Das Austauscherharz war mit HCO₃⁻ -Ionen beladen. Die Durchbruchskurven des Versuchs sind in Fig. 1 dargestellt. Sie zeigen, daß bei einem Durchsatz von ca. 15 Bettvolumina (BV) Lösung der Durchbruch von Tartrat beginnt. Nach 20 BV beträgt die Tartratkonzentration im Säulenablauf 85 - 90 % der Rohwasserkonzentration. Kupfer erscheint dagegen erst nach einem Durchsatz von etwa 75 BV im Säulenablauf. Nach etwa 100 BV Durchsatz ist der volle Schwermetallkomplex-Durchbruch erreicht.

### Beispiel 2

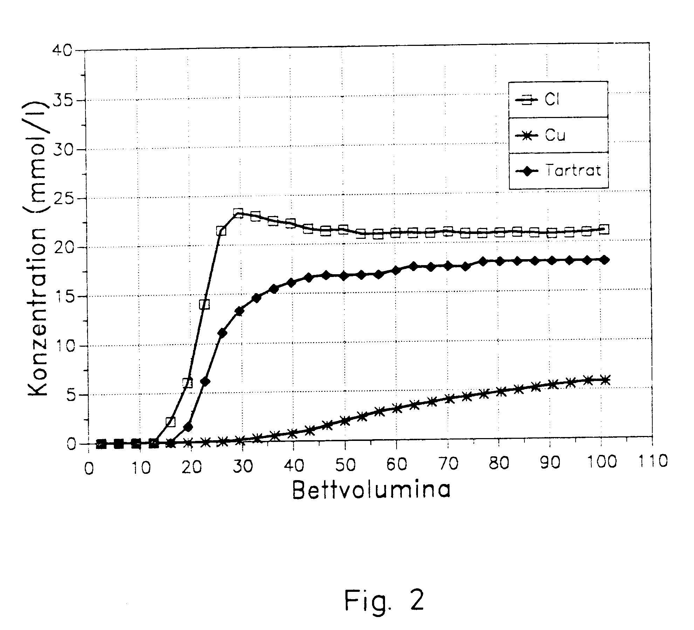

47 ml eines makroporösen, stark basischen Anionenaustauschers vom Typ II (Handelsname LEWATIT MP 600) wurde bei gleicher Vorbeladung und unter gleichen Versuchsbedingungen wie in Beispiel 1 mit der gleichen Lösung beaufschlagt. Die Durchbruchskurven sind in Fig. 2 enthalten. Auch hier ist die Trennung von Kupfer und Tartrat zu beobachten, jedoch beginnt der Kupferdurchbruch wesentlich früher und es wird nur eine Abreicherung an Kupfer, jedoch keine vollständige Abtrennung erreicht.

### Beispiel 3

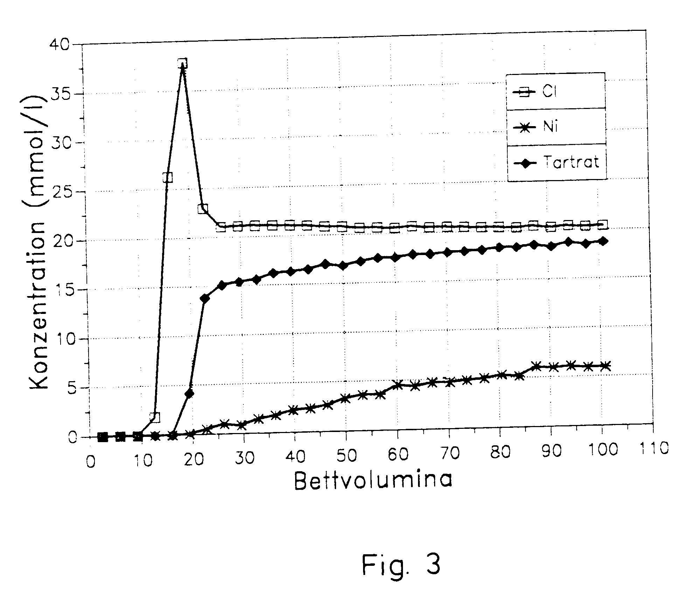

47 ml des in Beispiel 1 verwendeten Austauscher in HCO₃⁻-Form wurde mit einer Lösung beaufschlagt, die 10 mmol/l NiCl₂ und 20 mmol/l Na-Tartrat enthielt. Die Versuchsbedingungen entsprechen denen von Beispiel 1. Die Ergebnisse sind in Fig. 3 wiedergegeben. Hier wird - ähnlich wie in Beispiel 2 - eine Nickelabreicherung der Rohlösung erreicht, jedoch keine vollständige Trennung.

### Beispiel 4

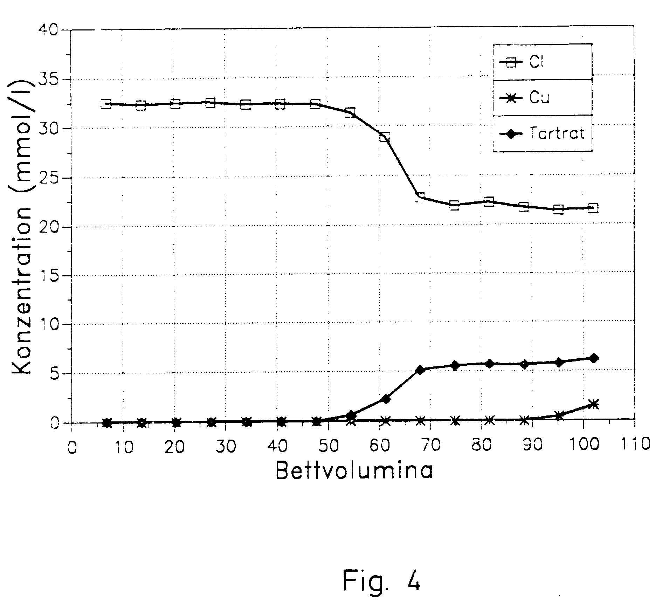

47 ml eines schwach basischen Anionenaustauschers auf Acrylamidbasis (Handelsname AMBERLITE IRA 35) in Cl⁻-Form wurden mit einer Lösung beaufschlagt, die 10 mmol/l CuCl₂ und 10 mmol/l Na-Tartrat enthielt. Die weiteren Versuchsbedingungen entsprechen denen von Beispiel 1. Die Durchbruchskurven von Fig. 4 zeigen, daß auch in diesem Fall nach Beginn des Tratratdurchbruchs eine kupferfreie Lösung abläuft. Der Kupferdurchbruch erfolgt etwa 40 BV später als der Tratratdurchbruch.

### Beispiel 5

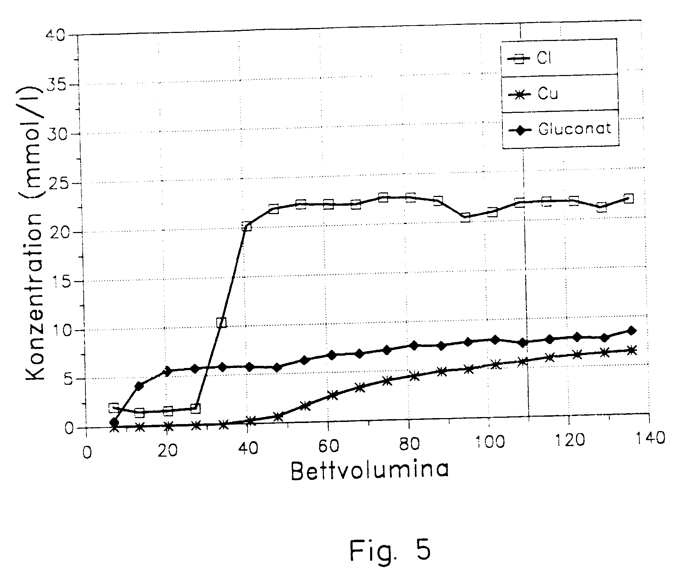

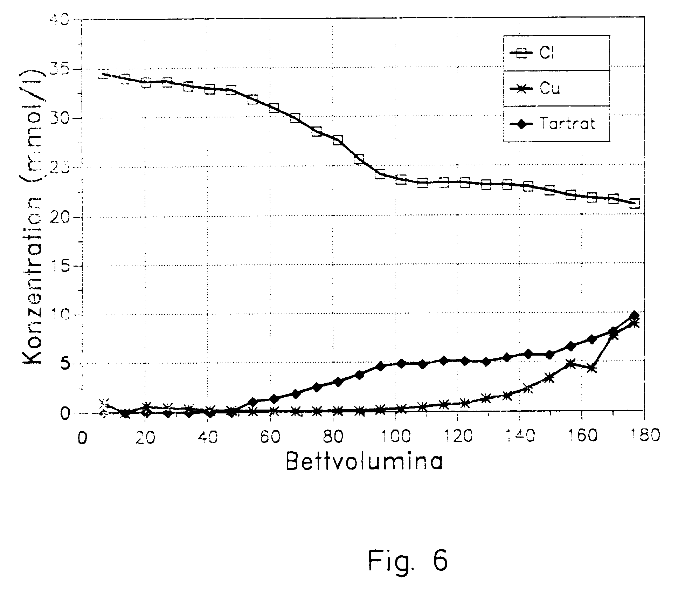

47 ml des Austauschers von Beispiel 1 wurde mit einer Lösung mit 10 mmol/l CuCl₂ und 10 mmol/l Na-Gluconat beaufschlagt. Die weiteren Versuchsbedingungen blieben unverändert. Der Verlauf der Durchbruchskurven in Fig. 5 ergibt, daß bis zu einem Gesamtdurchsatz von 40 eine kupferfreie Gluconatlösung abläuft.

### Beispiel 6

47 ml eines stark basischen Anionenaustauschers aus vernetztem Polystyrol mit Pyridiniumgruppen als funktionellen Bestandteilen (früherer Handelsname PERMUTIT SK-G), beladen mit Cl⁻-Ionen, wurden mit der Lösung des Beispiels 4 unter sonst gleichen Bedingungen beaufschlagt. Die Ergebnisse sind in Fig. 6 enthalten. Entsprechend dem Vorfahren nach DE-PS 36 14 061 werden zunächst Schwermetall und Komplexbildner praktisch vollständig eliminiert, dann jedoch bricht zunächst das Tartrat durch und erst ca. 50 BV später erscheinen auch Kupferionen im Ablauf.

## Patentansprüche

1. Verfahren zur Reinigung von Abwasser, das mit organischen Komplexbildnern komplexierte Metallionen enthält, bei dem
a) ein Anionenaustauscher mit einem Anion beladen wird, das mit den Metallionen keinen oder einen schwächeren Komplex bildet als die Metallionen mit dem Komplexbildner,
b) das Abwasser in den beladenen Anionenaustauscher in der Weise eingeleitet wird, daß sich im Anionenaustauscher eine führende und eine nachfolgende Zone ausbildet,
dadurch gekennzeichnet, daß
c) Abwasser eingesetzt wird, bei dem die Metallionen durch organische Komplexbildner mittlerer Komplexierungsstärke komplexiert sind,
d) die Einleitung des Abwassers spätestens beim Durchbruch der nachfolgenden Zone beendet wird.

2. Verfahren nach Anspruch 1, dadurch gekennzeichnet, daß als Anionenaustauscher ein schwach basischer Anionenaustauscher eingesetzt wird.

3. Verfahren nach Anspruch 1, dadurch gekennzeichnet, daß als Anionenaustauscher ein stark oder schwach basischer Anionenaustauscher mit einem Polyacrylsäureamid als funktioneller Gruppe eingesetzt wird.

4. Verfahren nach Anspruch 1, dadurch gekennzeichnet, daß als Anionenaustauscher ein Anionenaustauscher mit Pyridinium als funktioneller Gruppe eingesetzt wird.

5. Verfahren nach Anspruch 1, dadurch gekennzeichnet, daß Anionenaustauscher mit den funktionellen Gruppen - N⁺(CH₃)₃ oder - N⁺ (CH₃)₂ (C₂ H₄ OH) eingesetzt werden.

6. Verfahren nach einem der Ansprüche 1 bis 5, dadurch gekennzeichnet, daß der Anionenaustauscher in Schritt a) mit Hydrogencarbonat beladen wird.

## Claims

1. Method of purifying waste water, which contains metal ions complexed with organic complexing agents, wherein
a) an anion exchanger is charged with an anion, which forms with the metal ions no complex or a weaker complex than the metal ions with the complexing agent,
b) the waste water is introduced into the charged anion exchanger in such a manner that a leading zone and a following zone are formed in the anion exchanger, characterised in that
c) waste water is used, wherein the metal ions are complexed by tartaric acid, citric acid, gluconic acid or organic complexing agents having a similar complexing strength,
d) the introduction of the waste water is terminated at the latest with the penetration of the complexed metal ions in the following zone.

2. Method according to claim 1, characterised in that a weakly basic anion exchanger is used as the anion exchanger.

3. Method according to claim 1, characterised in that a strongly or weakly basic anion exchanger, having a polyacrylic acid amide as the functional group, is used as the anion exchanger.

4. Method according to claim 1, characterised in that an anion exchanger, having pyridinium as the functional group, is used as the anion exchanger.

5. Method according to claim 1, characterised in that anion exchangers, having the functional groups - N⁺(CH₃)₃ or - N⁺(CH₃)₂ (C₂ H₄ OH), are used.

6. Method according to one of claims 1 to 5, characterised in that the anion exchanger in step a) is charged with hydrogen carbonate.

## Revendications

1. Procédé de purification des eaux usées qui renferment des ions métalliques complexés par des agents complexants organiques, dans lequel
a) un échangeur d'anions est chargé par un anion qui ne forme pas de complexe avec les ions métalliques ou qui forme un complexe plus faible que celui des ions métalliques avec l'agent complexant,
b) des eaux usées sont introduites dans l'échangeur d'anions chargé de manière à ce qu'il se forme dans l'échangeur d'anions une zone dirigeante et une zone subséquente,
caractérisé en ce que
c) des eaux usées sont mises en jeu, dans lesquelles les ions métalliques sont complexés par de l'acide tartrique, de l'acide citrique, de l'acide gluconique ou des agents complexants de force complexante semblable,
d) l'introduction des eaux usées est terminée au plus tard par rupture des ions métalliques complexés dans la zone subséquente.

2. Procédé selon la revendication 1, caractérisé en ce que comme échangeur d'anions on met en oeuvre un échangeur d'anions faiblement basique.

3. Procédé selon la revendication 1, caractérisé en ce que comme échangeur d'anions on met en oeuvre un échangeur d'anions fortement ou faiblement basique avec un amide d'acide polyacrylique comme groupe fonctionnel.

4. Procédé selon la revendication 1, caractérisé en ce que comme échangeur d'anions on met en oeuvre un échangeur d'anions avec du pyridinium comme groupe fonctionnel.

5. Procédé selon la revendication 1, caractérisé en ce que l'on met en oeuvre un échangeur d'anions avec les groupes fonctionnels -N⁺(CH₃)₃ ou -N⁺(CH₃)₂ (C₂H₄OH).

6. Procédé selon l'une des revendications 1 à 5, caractérisé en ce que l'échangeur d'anions dans l'étape a) est chargé avec de l'hydrogenocarbonate.
